# EUROPÄISCHE PATENTSCHRIFT

(11) **EP 2 508 338 B1**
(45) Veröffentlichungstag und Bekanntmachung des Hinweises auf die Patenterteilung: **26.10.2016**
(21) Anmeldenummer: 12002439.3
(22) Anmeldetag: 04.04.2012
(51) Int. Cl.: B32B 7/06, B32B 27/08, B32B 27/32, B65D 65/40

(54) **Mehrschichfolie für leicht zu öffnende Verpackungen**
Multi-layer film for easy-open packets
Feuille multicouche pour emballages s'ouvrant facilement

(30) Priorität: 04.04.2011 DE 102011015958
(43) Veröffentlichungstag der Anmeldung: 10.10.2012
(73) Patentinhaber: Wipak Walsrode GmbH & Co. KG, 29699 Bomlitz (DE)
(72) Erfinder: Richards, Jaquie, 27374 Visselhövede (DE); Sperlich, Bernd, 29664 Walsrode (DE); Marter, Michael, 29614 Soltau (DE)
(74) Vertreter: Kutzenberger, Helga

(56) Entgegenhaltungen:
- EP-A1- 1 749 655
- EP-A1- 2 067 717
- WO-A1-00/78545
- DE-A1-102010 033 472

## Beschreibung

Die vorliegende Erfindung betrifft eine Mehrschichtfolie umfassend eine Schichtfolge aus
(a) einer Siegelschicht (a) basierend auf wenigstens einem heißsiegelfähigen, thermoplastischen Olefin-Homo- und/oder Copolymer,
(b) einer durch Kohäsionspeel trennbaren Haftvermittlerschicht (b) aufgebaut aus einer Mischung bestehend aus wenigstens einem modifizierten, thermoplastischen Olefin-Homo- und/oder Copolymeren, das mit ≤ 1 Gew.-%, bezogen auf das Gewicht des Olefin-Homo- und/oder Copolymeren, polaren organischen Gruppen modifiziert ist als erste Polymerkomponente und bis zu 50 Gew.-%, bezogen auf das Gesamtgewicht der Mischung, von wenigstens einem Homo- und/oder Copolymer eines (Meth)acrylat als zweite Polymerkomponente, wobei die erste Polymerkomponente keine (Meth)acrylat-Einheiten aufweist,
(c) ggf. einer Schicht (c) basierend auf wenigstens einem Homo- und/oder Copolyamid,
(d) einer Barriereschicht (d),
(e) ggf. einer Schicht (e) basierend auf wenigstens einem Homo- und/oder Copolyamid.
(f) ggf. einer Haftvermittlerschicht (f),
(g) ggf. einer Schicht (g) basierend auf wenigstens einem thermoplastischen Olefin-Homo- und/oder Copolymeren und
(h) einer Trägerschicht (h) basierend auf wenigstens einem thermoplastischen Polymer,
eine und leicht zu öffnende, vorzugsweise zweiteilige Verpackung die zumindest teilweise aus den erfindungsgemäßen Mehrschichtfolien hergestellt wurde.

Aus dem Stande der Technik sind eine Vielzahl von Verpackungen aus Kunststoff bekannt, die zumindest teilweise aus einer eine heißsiegelbare Schicht aufweisende Mehrschichtfolie bestehen und durch Heißsiegeln erhaltene Siegelnähte verschlossen sind. Zum Öffnen der Verpackungen wird üblicherweise die Heißsiegelnaht aufgerissen. Um das Öffnen zu erleichtern, kann zum Beispiel das Siegelschichtmaterial der Mehrschichtfolie, aus der der Deckel hergestellt wurde, so zusammengesetzt werden, dass der Deckel mit dem Behälter nur peelbar verschlossen ist. Die Peelbarkeit des Siegelschichtmaterials führt aber oft zu einer unerwünschten Eintrübung des Deckels und zu einer verminderten Siegelfestigkeit zwischen den beiden Verpackungselementen, was zu erheblichen Nachteilen beim Transport entsprechender Verpackungen führen kann.

In EP 1 749 655 B1 wurde versucht, zumindest das Problem der verminderten Siegelfestigkeit durch Bereitstellung einer Mehrschichtfolie zu lösen, bei der nicht ein peelbares Siegelschichtmaterial vorliegt, sondern die Peelbarkeit in die an die Siegelschicht angrenzende Schicht verlagert wurde, die aber wieder über eine Haftvermittlerschicht mit dem weiteren Schichtverbund der Mehrschichtfolie verbunden ist.

Wenn z. B. ein Deckel aus einer so aufgebauten Mehrschichtfolie gegen die Öffnung eines Verpackungselementes gesiegelt wird, so verbleiben im Bereich der Siegelnaht die Siegelschicht und ein Teil der an die Siegelschicht angrenzenden Schicht beim Öffnen auf dem zweiten Verpackungselement, da die an die Siegelschicht angrenzende Schicht durchreißt. Dies führt aber oft zu keiner sauberen Trennung im Siegelnahtbereich, da es beim Aufreißen auch zu einem Weiterreißen, bzw. Abreißen außerhalb des Siegelnahtbereichs kommen kann und ggf. Reste der Mehrschichtfolie auf dem verpackten Gut, wie z. B. einem verpackten Lebensmittel verbleiben können. Verständlicherweise ist dies für einen Konsumenten unangenehm.

Es besteht daher ein Bedarf an Mehrschichtfolien, aus denen Verpackungen hergestellt werden können, die sich nicht nur durch ein kontrolliertes, gleichmäßiges Öffnen, sondern auch durch ein sauberes, d. h. auf den Siegelnahtbereich begrenztes, aber trotzdem leichtes Aufreißen beim Öffnen und eine ausgezeichnete Siegelfestigkeit auszeichnen.

Aufgabe der vorliegenden Erfindung war es daher, Mehrschichtfolien zur Verfügung zu stellen, aus denen Verpackungen hergestellt werden können, die sich durch ein kontrolliertes, außerhalb des Siegelnahtbereichs weitgehend störungsfreies, gleichmäßiges, leichtes Öffnen gegenüber den vorbekannten Verpackungen auszeichnen. Außerdem sollen solche Mehrschichtfolien bzw. die daraus hergestellten Verpackungen eine bessere Handhabung und Transportfähigkeit durch verbesserte mechanische Eigenschaften und durch Vermeidung von peelbaren Siegelschichtmaterialien gewährleisten.

Diese Aufgabe wird durch Bereitstellung der erfindungsgemäßen Mehrschichtfolie gelöst, die eine Mehrschichtfolie umfassend eine Schichtfolge aus
(a) einer Siegelschicht (a) basierend auf wenigstens einem heißsiegelfähigen, thermoplastischen Olefin-Homo- und/oder Copolymer,
(b) einer durch Kohäsionspeel trennbare Haftvermittlerschicht (b) aufgebaut aus einer Mischung bestehend aus wenigstens einem modifizierten, thermoplastischen Olefin-Homo- und/oder Copolymeren, das mit ≤ 1 Gew.-%, bezogen auf das Gewicht des Olefin-Homo- und/oder Copolymeren, polaren organischen Gruppen modifiziert ist, als erste Polymerkomponente und bis zu 50 Gew.-%, bezogen auf das Gesamtgewicht der Mischung, von wenigstens einem Homo- und/oder Copolymeren von (Meth)acrylat als zweite Polymerkomponente, wobei die erste Polymerkomponente keine (Meth)acrylat-Einheiten aufweist,
(c) ggf. einer Schicht (c) basierend auf wenigstens einem Homo- und/oder Copolyamid,
(d) einer Barriereschicht (d),
(e)ggf. einer Schicht (e) basierend auf wenigstens einem Homo- und/oder Copolyamid.
(f) ggf. einer Haftvermittlerschicht (f),
(g) ggf. einer Schicht (g) basierend auf wenigstens einem thermoplastischen Olefin-Homo- und/oder Copolymeren und
(h) einer Trägerschicht (h) basierend auf wenigstens einem thermoplastischen Polymer,
aufweist.

Die erfindungsgemäße Mehrschichtfolie weist neben der Haftvermittlerschicht (b) keine peelbare Schicht und keine weitere, durch Kohäsionspeel trennbare Schicht auf, da es durch die erfindungsgemäße Zusammensetzung der Haftvermittlerschicht (b) gelingt, neben einer ausreichenden Haftvermittlung sowohl zu der Schicht (a) als auch zu der angrenzenden Schicht (c) bzw. (d) auch eine ausreichend hohe Kohäsionspeelbarkeit der Schicht (b) zu erreichen, die zu einem kontrollierten, gleichmäßigen Öffnen einer aus der erfindungsgemäßen Mehrschichtfolie hergestellten Verpackung führt, wobei sich das Aufreißen auf den Siegelnahtbereich ohne ein Ab- oder Weiterreißen außerhalb dieses Bereiches trotz leichterem Öffnen gegenüber vorbekannten Verpackungen begrenzt.

Beim Öffnen der erfindungsgemäßen Verpackungen trennt sich die Schicht (b) in zwei in Längsrichtung parallel d.h. horizontal verlaufende Teilschichten sauber auf, ohne dass es zu einem Weiterreißen bzw. Abreißen außerhalb des Siegelnahtbereiches und damit zu einer ungewollten Kontamination des darin verpackten Gutes, vorzugsweise eines verpackten Lebensmittels kommt.

Dies gelingt insbesondere wegen der höheren Siegelfestigkeit bzw. ausgezeichneten Verbundhaftung zwischen der Schicht (a) und (b) bzw. der Schicht (b) und der unmittelbar angrenzenden Schicht (c) bzw. (d), die jeweils größer ist als die Kohäsion der Schicht (b).

Die Siegelfestigkeit bzw. die Verbundhaftung wird mit Hilfe der vor den Beispielen der vorliegenden Anmeldung offenbarten Methode bestimmt.

Unter dem Begriff "basierend auf" wird im Sinne der vorliegenden Erfindung verstanden, dass außer den in Zusammenhang mit diesem Begriff aufgeführten Polymerkomponenten keine weiteren Polymerkomponenten vorhanden sind, sondern allenfalls übliche Hilfsstoffe und/oder Additive in üblichen Mengen.

Es versteht sich von selbst, dass auch die Verbundhaftung zwischen allen weiteren in der erfindungsgemäßen Mehrschichtfolie vorhandenden Schichten höher sein muss, als die Kohäsion der Haftvermittlerschicht (b).

Vorzugsweise beträgt die Siegelfestigkeit einer Verpackung, die aus einer erfindungsgemäßen Mehrschichtfolie hergestellt wurde, höchstens 45 N/15mm, besonders bevorzugt 10 - 30 N/15mm.

Zur Herstellung der ggf. mehrlagigen Siegelschicht (a) der erfindungsgemäßen Mehrschichtfolie eignen sich heißsiegelfähige, thermoplastische Olefin-Homo- und/oder Copolymere, vorzugsweise thermoplastische Olefin-Homo-oder Copolymere von Ethylen und/oder Propylen mit ggf. weiteren α,β-ungesättigten Olefinen mit 4-10, d.h. 4,5, 6, 7, 8, 9 oder 10 Kohlenstoffatomen. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP) und Mischungen aus wenigstens zwei der genannten Polymere. Mit "LDPE" werden Polyethylene mit niedriger Dichte bezeichnet, die eine Dichte im Bereich von 0,86-0,93 g/cm³ aufweisen und sich durch einen hohen Verzweigungsgrad der Moleküle auszeichnen. Mit "HDPE" werden Polyethylene hoher Dichte bezeichnet, welche nur eine geringe Verzweigung der Molekülkette aufweisen, wobei die Dichte im Bereich zwischen 0,94 und 0,97 g/cm³ liegen kann.

Geeignete Olefin-Copolymere sind vorzugsweise Copolymere von Ethylen und Propylen oder Copolymere von Ethylen und/oder Propylen und wenigstens einem α-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem α-Olefin ausgewählt aus der Gruppe umfassend Buten, Hexen und Octen, deren Anteil im Olefin-Copolymeren vorzugsweise höchstens 25 mol-%, besonders bevorzugt höchstens 15 mol-%, jeweils bezogen auf das Gesamtgewicht des Olefin-Copolymeren, beträgt. Geeignete Copolymere von Ethylen und wenigstens einem α-Olefin sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen. Besonders geeignete Copolymere sind Copolymere von Propylen und Ethylen, wobei der Ethylenanteil bis zu 30 Gew.-% betragen kann.

Ganz besonders bevorzugt basiert die ggf. mehrlagige Siegelschicht (a) der erfindungsgemäßen Mehrschichtfolie auf einem Polypropylen, vorzugsweise mit statistischem Aufbau, und/oder auf einem Propylen/Ethylen-Copolymeren.

Die Siegelschicht (a) kann ein- oder mehrlagig, vorzugsweise ein- oder zweilagig sein, wobei bei einer Mehrlagigkeit vorzugsweise zur Herstellung aller Lagen dieselbe Art Homo- und/oder Copolymer, besonders bevorzugt dasselbe Homo- und/oder Copolymer eingesetzt wird.

Sofern die Siegelschicht (a) mehrlagig ist, kann vorzugsweise jede Lage dieselbe Dicke aufweisen.

Vorzugsweise kann die erfindungsgemäße Mehrschichtfolie eine dauerhafte Antifog-Wirkung aufweisen, um z. B. dem Verbraucher eine Inspektion des in einer aus der erfindungsgemäßen Mehrschichtfolie hergestellten Verpackung verpackten Gutes zu erlauben.

Unter dem Begriff "dauerhafte Antifog-Wirkung" wird im Sinne der vorliegenden Erfindung eine weitgehend gleichbleibend starke Antifog-Wirkung der erfindungsgemäßen Mehrschichtfolie als Verpackungsmaterial über einen Zeitraum von wenigstens sechs Monaten verstanden.

Zur Erzielung einer solchen Antifog-Wirkung wird vorzugsweise die ggf. mehrlagige Siegelschicht (a) der erfindungsgemäßen Mehrschichtfolie mit vorzugsweise 1,0 Gew.-% bis 12,0 Gew.-%, bezogen auf das Gesamtgewicht der Siegelschicht (a), wenigstens eines Antifog-Additivs ausgerüstet.

Besonders bevorzugt kann die Siegelschicht (a) 1,5 Gew.-% bis 10,0 Gew.-%, ganz besonders bevorzugt 3,0 Gew.-% bis 6,0 Gew.-%, wenigstens eines Antifog-Additivs, bezogen auf das Gesamtgewicht der ggf. mehrlagigen Siegelschicht (a), aufweisen

Vorzugsweise kann der Anteil des Antifog-Additivs in einer mehrlagigen Siegelschicht (a) von der äußersten Lage zu den innenliegenden Lagen kontinuierlich abnehmen, besonders bevorzugt kann das Antifog-Additiv nur in der äußersten Lage vorliegen.

Als Antifog-Mittel kann vorzugsweise wenigstens ein Additiv ausgewählt aus der Gruppe umfassend alkoxylierte und hydroxylierte Amine, alkoxylierte und hydroxylierte Amide, Polyol-Fettsäureester, vorzugsweise Glycerolfettsäureester, Ester, vorzugsweise Monoester, von Sorbitan und wenigstens einer Fettsäure, sowie jeweils deren entsprechende Salze, eingesetzt werden.

Geeignete alkoxylierte und hydroxylierte Amine sowie alkoxylierte und hydroxylierte Amide sind vorzugsweise ausgewählt aus der Gruppe umfassend N,N-Bis-(2-hydroxyethyl)-tetradecylamin, Bis-(2-hydroxyethyl)-pentadecylamin, Bis-(2-hydroxyethyl)-hexadecylamin, Bis-(2-hydroxyethyl)-heptadecylamin, Bis-(2-hydroxyethyl)-octadecylamin, Bis-(2-hydroxyethyl)-tetradecenylamin, Bis-(2-hydroxyethyl)-pentadecenylamin, Bis-(2-hydroxyethyl)-hexadecenylamin, Bis-(2-hydroxyethyl)-heptadecenylamin, Bis-(2-hydroxyethyl)-octadecenylamin, Caprylsäurediethanolamid, Caprinsäurediethanolamid, Laurinsäurediethanolamid, Myristinsäurediethanolamid, Palmitinsäurediethanolamid, Stearinsäurediethanolamid, Ölsäurediethanolamid, Linolsäurediethanolamid, Linolensäurediethanolamid und Arachidonsäurediethanolamid.

Unter einem "Polyol-Fettsäurester" sind Ester aus mehrwertigen, d.h. z.B. eines zwei-, drei-, vier- oder fünfwertigen Alkoholen zu verstehen, die mit einer aliphatischen, verzweigten oder unverzweigten, gesättigten oder ungesättigten Fettsäure verestert sind. Sind mehrere Alkoholfunktionen eines mehrwertigen Alkohols mit Fettsäuren verestert, so können diese Alkoholfunktionen jeweils unabhängig voneinander mit unterschiedlichen Fettsäuren verestert sein. Bevorzugte mehrwertige Alkohole sind Ethylenglycol, Glycerin (Glycerol) und 1,4-Butandiol. Besonders bevorzugt ist Glycerin. Glycerinfettsäureester umfassen somit Monoglyceride, Diglyceride und Triglyceride. Vorzugsweise sind die Fettsäuren ausgewählt aus der Gruppe umfassend Caprylsäure, Caprinsäure, Laurinsäure, Myristinsäure, Palmitinsäure, Stearinsäure, Ölsäure, Linolsäure, Linolensäure und Arachidonsäure. Bevorzugte Polyol-Fettsäureester sind ausgewählt aus der Gruppe umfassend Glycerinmonostearat, Glycerindistearat, Glycerinmonolaurat, Glycerindilaurat, Glycerinmonopalmitat, Glycerindipalmitat, Glycerinmonomyristat und Glycerindimyristat.

Geeignete Ester von Sorbitan sind Mono-, Di-, Tri- und Tetraester von Sorbitan, vorzugsweise Monoester von Sorbitan und wenigstens einer aliphatischen, verzweigten oder unverzweigten, gesättigten oder ungesättigten Fettsäure wie z.B. Caprylsäure, Caprinsäure, Laurinsäure, Myristinsäure, Palmitinsäure, Stearinsäure, Ölsäure, Linolsäure, Linolensäure und Arachidonsäure. Ein besonders bevorzugter Monoester von Sorbitan ist Sorbitanmonolaurat.

Vorzugsweise ist die Schichtdicke der ggf. mehrlagigen Siegelschicht (a) höchstens 20 µm, vorzugsweise beträgt sie 5 bis 13 µm, wobei die Siegelschicht (a) eine um wenigstens 10 %, vorzugsweise eine um wenigstens 30 % höhere Schichtdicke als die Schicht (b) aufweist.

Zur Herstellung der Haftvermittlerschicht (b) der erfindungsgemäßen Mehrschichtfolie werden Polymer-Mischungen bestehend aus wenigstens einem modifizierten, thermoplastischen Olefin-Homo- und/oder Copolymeres, das zu ≤ 1 Gew.-%, vorzugsweise zu 0,05 - 0,3 Gew.-% bezogen auf das Homo- und/oder Copolymeren, mit polaren, organischen Gruppen, vorzugsweise mit organischen Säuregruppen und/oder organischen Anhydridgruppen, besonders bevorzugt mit zyklischen organischen Anhydridgruppen, ganz besonders bevorzugt mit Maleinsäureanhydridgruppen modifiziert ist, als erste Polymerkomponente und aus bis zu 50 Gew.-%, bezogen auf das Gesamtgewicht der Mischung, von wenigstens einem Homo- und/oder Copolymeren von (Meth)acrylat als zweite Polymerkomponente eingesetzt.

Methoden zur Modifizierung der thermoplastischen Olefin-Homo- oder Copolymeren, die sich zur Herstellung der Haftvermittlerschicht (b) als erste Polymerkomponente eignen, sind dem Fachmann bekannt. Vorzugsweise erfolgt die Modifizierung durch Pfropfung auf das thermoplastische Olefin-Homo- oder Copolymere, das vorzugsweise überwiegend (mehr als 50 %) aus einem Olefin aufgebaut ist, aus dem auch das Siegelschichtpolymere der Schicht (a) überwiegend (mehr als 50 %) aufgebaut ist, besonders bevorzugt jeweils aus Propylen.

Ganz besonders bevorzugt wird zur Modifizierung ein thermoplastisches Olefin-Homo oder Copolymere derselben Art eingesetzt, das auch als Siegelschichtmaterial der Siegelschicht (a) eingesetzt wird. Ganz besonders bevorzugt liegt ein mit zyklischen organischen Säureanhydridgruppen modifiziertes Ethylen- oder Propylen-Homo- oder Copolymeres vor, ganz besonders bevorzugt ein mit Maleinsäureanhydridgruppen in dem vorstehend genannten Ausmaß modifiziertes Propylen-Homo-polymeres oder Propylen/Ethylen-Copolymeres als erste Polymerkomponente der Mischung zur Herstellung der Haftvermittlerschicht (b) vor. Als zweite Polymer-Komponente der Mischung, aus der die Schicht (b) hergestellt wird, liegen bis zu 50 Gew.-%, vorzugsweise von 5 - 30 Gew.-%, bezogen auf das Gesamtgewicht der Mischung, wenigstens ein Homo- oder Copolymeren von (Meth)acrylat vor. Die beiden Polymerkomponenten, aus der die Schicht (b) hergestellt wird, ergeben immer zusammen 100 Gew.-%.

Als Copolymere eignen sich wenigstens ein Copolymer aus wenigstens einem Olefin mit 2-4, d.h., 2, 3 oder 4 Kohlenstoffatomen, vorzugsweise mit 2 oder 3 Kohlenstoffatomen, und wenigstens einem (Meth)acrylat. Zur Herstellung solcher Copolymere eignen sich besonders bevorzugt wenigstens ein Olefin ausgewählt aus der Gruppe umfassend Ethylen und Propylen und wenigstens ein Alkyl(meth)acrylat, vorzugsweise ein C₁₋₄-Alkyl(meth)acrylat, besonders bevorzugt Methyl(meth)acrylat, Ethyl(meth)acrylat, n- oder Isopropyl(meth)acrylat, n- oder iso-Butyl(meth)acrylat, tert.-Butyl(meth)acrylat, 2-Ethylhexyl(meth)acrylat, Cyclohexyl(meth)acrylat oder Isobornyl(meth)acrylat. Besonders bevorzugt ist Methyl(meth)acrylat und/oder Ethyl(meth)acrylat.

Die aufgeführten (Meth)acrylate können auch als Homopolymere eingesetzt werden.

Die Begriffe "Alkyl(meth)acrylat" umfassen im Sinne der vorliegenden Erfindung sowohl Alkylmethacrylate als auch Alkylacrylate.

Vorzugsweise beträgt der Olefin-Anteil in dem als zweite Polymerkomponente zum Einsatz kommenden (Meth)acrylat-Copolymeren wenigstens 50 mol-%, vorzugsweise wenigstens 65 mol-%, besonders bevorzugt wenigstens 70 mol-%, ganz besonders bevorzugt wenigstens 75 mol-%, jeweils bezogen auf das Gesamtgewicht des Copolymeren.

Vorzugsweise weist die Haftvermittlerschicht (b) der erfindungsgemäßen Mehrschichtfolie eine Schichtdicke von höchstens 6 µm, bevorzugt von 0,5 bis 5 µm, ganz besonders bevorzugt 1,5 - 4 µm auf.

Zur Herstellung der Schicht (c) und der Schicht (e) der erfindungsgemäßen Mehrschichtfolie eignen sich Homo- und/oder Copolyamide, die vorzugsweise ausgewählt sind aus der Gruppe umfassend thermoplastische aliphatische, teilaromatische und aromatische Homo- oder Copolyamide. Diese Homo- oder Copolymamide können aus aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen und/oder aromatischen Dicarbonsäuren mit 6-14 Kohlenstoffatomen wie z.B. Adipinsäure, Terephthalsäure oder Isoterephthalsäure aufgebaut sein. Weiterhin können diese Homo- oder Copolyamide aus Lactamen mit 4-10 Kohlenstoffatomen wie z.B. aus ε-Caprolactam hergestellt werden. Erfindungsgemäß zum Einsatz kommende Homo- und/oder Copolyamide sind vorzugsweise ausgewählt aus der Gruppe umfassend PA 6, PA 12, PA 66, PA 6I, PA 6T, entsprechende Copolymere und Mischungen aus wenigstens zwei der genannten Polymere.

Vorzugsweise ist die Dicke der Schicht (c) bzw. (e) identisch und beträgt 1,0 bis 6 µm, besonders bevorzugt 2 bis 4 µm.

Die erfindungsgemäße Mehrschichtfolie weist eine Schicht (d) als Barriereschicht, vorzugsweise als eine Gasbarriereschicht auf, welche vorzugsweise jeweils mit der angrenzenden Schicht aus Polyamid verbunden ist. Besonders bevorzugt ist die Schicht (d) eine Sauerstoffbarriereschicht und/oder eine Wasserdampfbarriereschicht.

Vorzugsweise basiert die Schicht (d) der erfindungsgemäß zum Einsatz kommenden Mehrschichtfolie auf wenigstens einem thermoplastischen Polymeren ausgewählt aus der Gruppe umfassend Ethylen-Vinylalkohol-Copolymere (EVOH), zumindest teilverseifte Polyvinylacetate, Polyvinylidenchlorid (PVDC), Vinylidenchlorid-Copolymere, vorzugsweise mit einem Anteil an Vinylidenchlorid von wenigstens 80 mol-%, bezogen auf das Gesamtgewicht des Vinylidenchlorid-Copolymeren, oder einer Mischung aus wenigstens zwei der genannten Polymere, besonders bevorzugt auf wenigstens einem Ethylen-Vinylalkohol-Copolymeren.

Die zur Herstellung der Schicht (d) eingesetzten Ethylen-Vinylalkohol-Copolymere (EVOH) werden durch vollständige oder unvollständige Hydrolyse von entsprechenden Ethylen-Vinylacetat-Copolymeren (EVAc) gewonnen. Vorzugsweise werden vollverseifte Ethylen-Vinylacetat-Copolymere mit einem Verseifungsgrad ≥ 98% und einem Ethylen-Anteil von 0,01-80 mol-%, vorzugsweise von 1-50 mol-%, jeweils bezogen auf das Gesamtgewicht des Ethylen-Vinylalkohol-Copolymeren, eingesetzt.

Die zur Herstellung der Schicht (d) der erfindungsgemäß zum Einsatz kommenden Mehrschichtfolie zumindest teilverseiften Polyvinylacetate werden durch vollständige oder unvollständige Hydrolyse von entsprechenden Polyvinylacetaten gewonnen. Besonders bevorzugt zur Herstellung der Schicht (d) eingesetzte zumindest teilverseifte Polyvinylacetate sind ausgewählt aus der Gruppe umfassend vollverseifte Polyvinylacetate (Polyvinylalkohole, PVOH) mit einem Verseifungsgrad > 98 % und teilverseifte Polyvinylacetate mit einem Verseifungsgrad von 75 bis einschließlich 98%.

Vorzugsweise weist die Schicht (d) der erfindungsgemäß zum Einsatz kommenden Mehrschichtfolie eine Schichtdicke von 1 µm bis 10 µm, besonders bevorzugt von 1,5 bis 5 µm auf.

Die ggf. vorhandene Schicht (e) aus Polyamid ist ggf. über eine Haftvermittlerschicht (f) mit der an sie angrenzenden ggf. vorhandenen Schicht (g) oder der Trägerschicht (h) verbunden.

Vorzugsweise ist die Haftvermittlerschicht (f) aus wenigstens einem modifizierten thermoplastischen Olefin-Homo- und/oder Copolymeren aufgebaut. Dabei kann zur Herstellung dieser Schicht als Polymer dasselbe modifizierte thermoplastischen Olefin-Homo- und Copolymeren eingesetzt werden, das auch bei der Herstellung der Schicht (b) in der zwei Komponenten-Polymer-Mischung eingesetzt wird. Besonders bevorzugt ist auch die Haftvermittlerschicht (f) aus wenigstens einem mit einem zyklischen organischen Säureanhydrid-Gruppen modifizierten Ethylen- oder Propylen- Homo- oder Copolymeren, besonders bevorzugt aus einem mit Maleinsäureanhydrid-Gruppen modifizierten Ethylen- oder Propylen- Homo- oder Copolymeren aufgebaut.

Vorzugsweise weist die Haftvermittlerschicht (f) der erfindungsgemäß zum Einsatz kommenden Mehrschichtfolie eine Schichtdicke von höchstens 8 µm, besonders bevorzugt höchstens 5 µm, ganz besonders bevorzugt von höchstens 3 µm auf.

In einer weiteren bevorzugten Ausführungsform weist die erfindungsgemäß zum Einsatz kommende Mehrschichtfolie aus produktionstechnischen Gründen auch eine ggf. mehrlagige, vorzugsweise zweilagige Schicht (g) basierend auf wenigstens einem thermoplastischen Olefin-Homo- oder Copolymeren auf.

Zur Herstellung der Schicht (g) der erfindungsgemäß zum Einsatz kommenden Mehrschichtfolie eignet sich dieselbe Art von thermoplastischen Olefin-Homo- und Copolymeren, welche auch zur Herstellung der Siegelschicht (a) eingesetzt werden können. Bevorzugt ist ein thermoplastisches Olefin-Copolymer, vorzugsweise ein Propylen/Ethylen-Copolymer.

Vorzugsweise bestehen die Lagen einer mehrlagigen Schicht (g) aus derselben Art Homo- und/oder Copolymer, besonders bevorzugt aus denselben Homo- und/oder Copolymeren.

Vorzugsweise weist die Schicht (g) der erfindungsgemäß zum Einsatz kommenden Mehrschichtfolie eine Schichtdicke von höchstens 25 µm, besonders bevorzugt höchstens 20 µm, ganz besonders bevorzugt von höchstens 15 µm auf.

Bei einer Mehrlagigkeit der Schicht (g) weist vorzugsweise jede Lage dieselbe Dicke auf.

Die erfindungsgemäße Mehrschichtfolie weist ferner eine vorzugsweise transparente, gegebenenfalls zumindest teilweise bedruckte Trägerschicht (h) auf.

Zur Herstellung der Trägerschicht (h) der erfindungsgemäß zum Einsatz kommenden Mehrschichtfolie eignet sich vorzugsweise wenigstens ein thermoplastisches Polymer.

Vorzugsweise ist die Trägerschicht (h) der erfindungsgemäßen Mehrschichtfolie aus wenigstens einem thermoplastischen Polymeren ausgewählt aus der Gruppe umfassend Olefin-Homo oder Copolymere, Homo- und Copolyamide und Homo- und Copolyester aufgebaut. Besonders bevorzugt basiert die Trägerschicht (h) auf wenigstens einem Homo- und/oder Copolyamid und ggf. üblichen Additiven.

Zur Herstellung der Trägerschicht (h) kann dieselbe Art von Olefin-Homo oder Copolymeren eingesetzt werden, welche auch zur Herstellung der Siegelschicht (a) der erfindungsgemäßen Mehrschichtfolie eingesetzt werden können.

Weiterhin kann zur Herstellung der Trägerschicht (h) dieselbe Art von Homo- und Copolyamiden eingesetzt werden, welche auch zur Herstellung der Schichten (c) und (e) der erfindungsgemäßen Mehrschichtfolie verwendet werden können.

Geeignete Homo- und/oder Copolyester zur Herstellung der Trägerschicht (h) der erfindungsgemäßen Mehrschichtfolie sind vorzugsweise wenigstens ein thermoplastischer Polyester ausgewählt aus der Gruppe umfassend amorphe aliphatische, teilaromatische und aromatische Homo- und Copolyester.

Solche Homo- und Copolyester leiten sich von Polyolen, vorzugsweise von Diolen, wie z.B. Ethylenglykol oder 1,4-Butandiol und Dicarbonsäuren oder DicarbonsäureDerivaten wie Adipinsäure, Isoterephthalsäure und/oder Terephthalsäure ab.

Erfindungsgemäß können zur Herstellung der Trägerschicht (j) als Homo- und/oder Copolyester auch Polycarbonate (PC) verwendet werden.

Als Homopolyester werden solche Polyester bezeichnet, die sich jeweils von einer Polyol-Komponente und einer Dicarbonsäure-Komponente ableiten. Geeignete Homopolyester sind vorzugsweise ausgewählt aus der Gruppe umfassend PET, PBA, und PBT. Mit "PET" wird Polyethylenterephthalat bezeichnet, welches aus Ethylenglykol und Terephthalsäure hergestellt werden kann. Mit "PBA" wird Polybutylenadipat bezeichnet, welches aus Butan-1,4-diol und Adipinsäure hergestellt werden kann. Mit "PBT" wird Polybutylenterephthalat bezeichnet, welches aus Butan-1,4-diol und Terephthalsäure hergestellt werden kann. Der vorzugsweise amorphe Zustand wird dabei durch das Präfix "A" gekennzeichnet. Ein besonders bevorzugter amorpher Homopolyester ist APET (amorphes PET).

Als Copolyester werden solche Polyester bezeichnet, die neben einer Polyol-Komponente und einer Dicarbonsäure-Komponente noch wenigstens ein weiteres Co-Monomer, vorzugsweise eine weitere Polyol-Komponente, enthalten. Geeignete vorzugsweise amorphe Copolyester sind Copolyester aus einer aromatischen Dicarbonsäure wie Terephthalsäure, einem aliphatischen Glykol wie Ethylenglykol und wenigstens einem weiteren Polyol, vorzugsweise wenigstens einem weiteren Polyol ausgewählt aus der Gruppe umfassend vorzugsweise verzweigte aliphatische Polyole, aromatische Polyole und cycloaliphatische Polyole. Ein besonders bevorzugter amorpher Copolyester leitet sich von Ethylenglykol, Terephthalsäure und 1,4-Cyclohexandimethanol ab.

Die Trägerschicht (h) der erfindungsgemäßen Mehrschichtfolie kann geprägt und/oder orientiert, vorzugsweise monoaxial oder biaxial orientiert, besonders bevorzugt biaxial orientiert sein.

Die Trägerschicht (h) der erfindungsgemäßen Mehrschichtfolie weist vorzugsweise eine Schichtdicke von 10 µm bis 100 µm, besonders bevorzugt von 12 µm bis 80 µm auf.

Vorzugsweise kann die Trägerschicht (h) mit dem übrigen Schichtverbund der erfindungsgemäßen Mehrschichtfolie, vorzugsweise mit der ggf. vorhandenen Schicht (g) oder (f) oder der Schicht (e) dieses Schichtverbundes, über eine Klebstoffschicht basierend auf wenigstens einem Kaschierklebstoff, vorzugsweise einem Kaschierklebstoff basierend auf einem Polyurethan, besonders bevorzugt einem Zwei-Komponenten-Polyurethanklebstoff, verbunden sein.

Vorzugsweise weist die Klebstoffschicht der erfindungsgemäßen Mehrschichtfolie eine Schichtdicke von höchstens 10 µm, besonders bevorzugt höchstens 5 µm, ganz besonders bevorzugt von höchstens 3 µm auf.

Die erfindungsgemäße Mehrschichtfolie weist vorzugsweise eine Gesamtschichtdicke von 35 µm bis 200 µm, besonders bevorzugt von 40 µm bis 150 µm, ganz besonders bevorzugt von 45 µm bis 120 µm, insbesondere von 50 µm bis 100 µm, insbesondere bevorzugt von 45 µm bis 80 µm auf.

Jede der Schichten der erfindungsgemäßen Mehrschichtfolie, vorzugsweise die Siegelschicht (a), kann, falls erforderlich wenigstens ein dem Fachmann bekanntes übliches Additiv enthalten, vorzugsweise wenigstens ein Additiv ausgewählt aus der Gruppe umfassend Antiblockmittel, Farbstoffe, Antioxidantien und/oder Antistatika. Dabei kann jede der Schichten jeweils unabhängig voneinander wenigstens 0,01-20 Gew.-%, vorzugsweise wenigstens 0,1-10 Gew.-%, jeweils bezogen auf das Gesamtgewicht einer einzelnen Schicht, wenigstens eines der vorstehend genannten Additive enthalten.

Vorzugsweise können die Schichten (a), (b), (d), sowie die ggf. vorhandenen Schichten (c), (e), (f) und (g) der erfindungsgemäßen Mehrschichtfolie teilweise oder insgesamt in Form einer Schlauchfolie oder einer Cast-Folie produziert und verarbeitet werden.

Demzufolge kann die Herstellung der einzelnen Schichten (a), (b), (d), sowie den vorhandenen Schichten (c), (e), (f) und (g) der erfindungsgemäßen Mehrschichtfolie durch (Co)-Extrusion, besonders bevorzugt durch Blasfolien-(Co)-Extrusion oder durch Cast-(Co)-Extrusion erfolgen.

Die vorhandene Trägerschicht (h) der erfindungsgemäßen Mehrschichtfolie ist vorzugsweise durch Extrusion erhältlich und kann mit dem Schichtverbund der Mehrschichtfolie, vorzugsweise mit der Schicht (f) oder (g), über eine Klebstoffstoffschicht verbunden werden.

Nach der (Co)-Extrusion können einzelne Schichten oder Schichtverbunde oder die Mehrschichtfolie insgesamt gegebenenfalls gereckt, d.h. orientiert werden.

Sofern vorzugsweise die Siegelschicht (a) mit wenigstens einem Antifog-Additiv ausgerüstet wird, so kann dies vorzugsweise bei der Herstellung der Schicht (a) durchgeführt werden. Dabei ist zu beachten, dass die Dotierung der Siegelschicht (a) mit dem erfindungsgemäß zum Einsatz kommenden Antifog-Additiv durch Abmischen des Antifog-Additivs oder durch Abmischen mit einem Masterbatch aus dem eingesetzten Antifog-Additiv in der Polymerkomponente der Siegelschicht (a), mit dem verbleibenden Anteil des Polymeren Siegelschicht (a) erfolgen kann. Dieses Abmischen kann in Granulat/Pulver- oder Granulat/Granulat-Form trocken erfolgen. Es ist aber auch möglich, das Antifog-Additiv in das aufgeschmolzene Polymere der Siegelschicht (a) zuzugeben, vorzugsweise durch Zudosierung in einem für die Extrusion der Siegelschicht (a) verwendeten Extruder. Enthält ggf. wenigstens eine weitere Schicht der erfindungsgemäßen Mehrschichtfolie wenigstens ein weiteres der vorstehend geannten Additive, erfolgt die Dotierung mit diesem Additiv analog.

Die erfindungsgemäße Mehrschichtfolie eignet sich zur Herstellung von Verpackungselementen, vorzugsweise von Deckel, und Verpackungen jeglicher Art.

Ein weiterer Gegenstand der vorliegenden Erfindung ist eine leicht zu öffnende Verpackung, vorzugsweise eine Schlauchbeutelverpackung, die aus der vorstehend beschriebenen, erfindungsgemäßen Mehrschichtfolie durch Versiegeln der Siegelschichten miteinander zu Siegelnähten nach dem Befüllen verschlossen ist.

Ein weiterer Gegenstand der vorliegenden Erfindung ist auch eine leicht zu öffnende zweiteilige Verpackung, die einen Deckel aus einer vorstehend beschriebenen erfindungsgemäßen Mehrschichtfolie als ein erstes Verpackungselement aufweist. Vorzugsweise weist eine solche zweiteilige, leicht zu öffnende Verpackung einen offenen Behälter als zweites Verpackungselement auf, der mit diesem Deckel verschlossen ist.

Der Behälter als zweites Verpackungselement einer erfindungsgemäßen Verpackung ist vorzugsweise eine Mulde oder eine Schale geformt aus einem ein- oder mehrschichtigen, vorzugsweise einschichtigen Film aus einem thermoplastischen Polymeren, die gegebenenfalls eine ggf. mehrlagige Siegelschicht (s) basierend auf einem heißsiegelfähigen thermoplastischen Polymeren aufweist. Sowohl der ein- oder mehrschichtige Film als auch die ggf. mehrlagige Siegelschicht (s) sind vorzugsweise transparent.

Vorzugsweise ist auch der Deckel aus der erfindungsgemäßen Mehrschichtfolie transparent.

Zur Herstellung des Behälters, aber zumindest zur Herstellung der Siegelschicht (s) des erfindungsgemäß zum Einsatz kommenden Behälters, eignen sich vorzugsweise dieselben, heißsiegelfähigen thermoplastischen Olefin- Homo und/oder Copolymere, die zur Herstellung der Siegelschicht (a) der Deckelfolie eingesetzt werden können. Vorzugsweise basiert die Siegelschicht (s) des erfindungsgemäß zum Einsatz kommenden Behälters auf dem- oder denselben Polymeren wie die Siegelschicht (a) der Deckelfolie. Vorzugsweise gilt dies auch bei einer Mehrlagigkeit der Siegelschicht (s).

Vorzugsweise weist die Siegelschicht (s) des erfindungsgemäß zum Einsatz kommenden Behälters eine Schichtdicke von ≤ 20 µm, besonders bevorzugt von 1 bis 12 µm, ganz besonders bevorzugt von 2 bis 11 µm auf, wobei bei einer Mehrlagigkeit der Siegelschicht (s) vorzugsweise jede Lage dieselbe Dicke aufweist.

Der Behälter einer solchen leicht zu öffnenden zweiteiligen Verpackung ist vorzugsweise durch Thermoverformung, besonders bevorzugt durch Tiefziehen, aus einem Film geformt worden. Vorzugsweise weist der erfindungsgemäß zum Einsatz kommende Behälter einen umlaufenden Rand auf, der die Größe der Öffnung des Behälters definiert, die mit dem Deckel über eine Siegelnaht verschlossen wird.

Vorzugsweise weist die erfindungsgemäße leicht zu öffnende Verpackung als zweites Verpackungselement einen Behälter geformt aus einem vorzugsweise einschichtigen Film aus einem thermoplastischen Polymer ausgewählt aus der Gruppe bestehend aus einem Homo- und Copolyester, einem Homo- und Copolyamid und einem Olefin-Homo- und Copolymeren auf, wobei der Film ggf. eine ggf. mehrlagige Siegelschicht (s) basierend auf einem heißsiegelfähigen, bereits definierten thermoplastischen Polymeren aufweisen kann.

Zur Herstellung des vorzugsweise einschichtigen Films des erfindungsgemäß zum Einsatz kommenden Behälters eignet sich ein thermoplastisches Polymer, vorzugsweise ein thermoplastisches Polymer ausgewählt aus der Gruppe umfassend Homo- und Copolyester, Olefin-Homo- und Copolymere und Homo- und Copolyamide.

Dabei können zur Herstellung des vorzugsweise einschichtigen Films des erfindungsgemäß zum Einsatz kommenden Behälters dieselben thermoplastischen Homo- und/oder Copolyester, Homo- und Copolyamide und Olefin-Homo- und/oder Copolymere eingetzt werden, die sich auch zur Herstellung der Trägerschicht (h) eignen.

Vorzugsweise weist der vorzugsweise einschichtige Film des erfindungsgemäß zum Einsatz kommenden Behälters eine Schichtdicke von 100 bis 1200 µm, besonders bevorzugt von 200 bis 1000 µm, auf.

Zur Herstellung der erfindungsgemäßen leicht zu öffnenden Verpackung wird die erfindungsgemäße, mehrschichtige Deckelfolie über die Öffnung des erfindungsgemäß zum Einsatz kommenden Behälters, vorzugsweise auf den umlaufenden Rand dieses Behälters, in Form einer Siegelnaht gesiegelt.

Die jeweiligen Herstellungsverfahren und entsprechende übliche Verfahrensparameter sind dem Fachmann allgemein bekannt.

Die Siegelung der erfindungsgemäßen Mehrschichtfolie gegen sich selbst oder als Deckel zur Herstellung einer Verpackung bzw. zum Verschließen der Öffnung eines Behälters erfolgt vorzugsweise für höchstens 2 Sekunden, besonders bevorzugt für höchstens ≤ 1,5 Sekunden, vorzugsweise bei einer Temperatur im Bereich von 150 bis 220 °C, besonders bevorzugt im Bereich von 180 bis 200 °C, und vorzugsweise bei einem Druck vorn ≥ 1,5 bar bis ≤ 6 bar, besonders bevorzugt von ≥ 2 bar bis ≤ 5,5 bar.

In einer bevorzugten Ausführungsform der leicht zu öffnenden, erfindungsgemäßen Verpackung entspricht die Verbundhaftung zwischen der ggf. mehrlagigen Siegelschicht (a) und der Schicht (b) der erfindungsgemäßen Mehrschichtfolie höchstens der Siegelfestigkeit zwischen den beiden Verpackungselementen.

Die Siegelfestigkeit der Siegelnähte wie z. B. zwischen den zwei Verpackungselementen Behälter und einem Deckel aus einer erfindungsgemäßen Mehrschichtfolie, beträgt vorzugsweise höchstens 45 N/15 mm, besonders bevorzugt 10 bis 30 N/15 mm.

Die Bestimmung der Siegelfestigkeit erfolgt gemäß der nachstehend beschriebenen Methode. Diese Methode kann auch angewendet werden, um die Verbundhaftung zwischen zwei Schichten zu prüfen.

Die erfindungsgemäßen Verpackungen zeichnen sich dadurch aus, dass sie kontrollierbar, leicht und exakt, d. h. durch horizontale Auftrennung der Schicht (b) in zwei Teilschichten im Bereich der Siegelnaht zu öffnen sind und dabei ein gleichmäßiges und ohne Erhöhung der Krafteinwirkung in einem Zug ausführbares Öffnen ermöglichen.

Für das Öffnen der erfindungsgemäßen Verpackungen ist es nicht unbedingt notwendig, eine Öffnungshilfe vorzusehen. Wenn dennoch eine Öffnungshilfe, vorzugsweise eine Lasche z. B. am Deckel vorliegt, so grenzt diese vorzugsweise an den äußeren Rand des Siegelnahtbereich der Verpackung an. Das Öffnen der Verpackung erfolgt durch Anheben der Verschlussfolie wie z. B. des Deckels bis hin zum Siegelnahtbereich, oder, falls eine Öffnungshilfe vorliegt, unter Benutzung dieser Öffnungshilfe.

Beim Öffnungsvorgang kommt es im Siegelnahtbereich zu einer im Wesentlichen horizontal verlaufenden Teilung der Schicht (b), so dass sich ein Schichtverbund aus der Siegelschicht (a) und der angrenzenden Teilschicht (b) von dem Schichtverbund aus der zweiten Teilschicht (b) und dem angrenzenden übrigen Schichtverbund der erfindungsgemäßen Mehrschichtfolie löst und entsprechend der Siegelnahtbreite weitgehend exakt aus der Schicht (a) und der angrenzenden Teilschicht (b) herausgerissen als herausgerissener Teil dieses Schichtverbundes auf dem Behälter verbleibt. Nach diesem Öffnen im Bereich der Siegelnaht kann die Verschlussfolie bzw. der Deckel von der Verpackung bzw. vom Behälter weiter leicht abgehoben werden.

Die erfindungsgemäße, leicht zu öffnende Verpackung, vorzugsweise die Deckelfolie der Verpackung, besonders bevorzugt die Trägerschicht (h) der erfindungsgemäß zum Einsatz kommenden mehrschichtigen Deckelfolie kann zumindest teilweise bedruckt und/oder eingefärbt transparent sein.

Die erfindungsgemäße, leicht zu öffnende Verpackung eignet sich vorzugsweise als Verpackung für Nahrungsmittel, besonders bevorzugt für Lebensmittel. Vorzugsweise liegt daher ein Lebensmittel als Verpackungsgut in der leicht zu öffnenden Verpackung verpackt vor und kann vorzugsweise durch die erfindungsgemäße, vorzugsweise transparente Mehrschichtfolie, vorzugsweise Deckelfolie problemlos betrachtet und entnommen werden.

Ein weiterer Gegenstand der vorliegenden Erfindung ist eine erfindungsgemäße, leicht zu öffnende Verpackung als eine Lebensmittelverpackung, besonders bevorzugt eine Verpackung für verderbliche Lebensmittel, vorzugsweise für Frischfleisch.

Das nachfolgende Beispiel und das Vergleichsbeispiel V1 dienen der Erläuterung der Erfindung, sind jedoch nicht einschränkend auszulegen.

### I. Chemische Charakterisierung der eingesetzten Rohstoffe:

| | |
|---|---|
| PP-Copolymer: | Propylen/Ethylen-Copolymer mit 4,2 Gew.% Ethylen (Schmelzpunkt: 145°C, Dichte: 0,905 g/cm³) |
| EVOH-Copolymer: | Ethylen-Vinylalkohol-Copolymer (Ethylen-Anteil: 38 mol-%) |
| HV1: | PP-Copolymer modifiziert mit Maleinsäureanhydrid |
| PA-6: | Polyamid 6 |
| PUR: | Klebstoff basierend auf Polyurethan |
| PA-6 (BO): | Biaxial orientiertes Polyamid 6 |
| PEA-Copolymer: | Propylen/Ethylacrylat-Copolymer |

### II. Herstellung der erfindungsgemäßen Mehrschichtfolie B1 bzw. einer Mehrschichtfolie V1 zum Vergleich.

Es wurden die Mehrschichtfolie B1 und V1 wie folgt hergestellt:
Die Mehrschichtfolie B1 bzw. V1 wurde zunächst als 7 bzw. 8-schichtige Folie (Schichten (a) - (g)) durch Blasfolien-Co-Extrusion hergestellt. Die einzelnen vorstehend genannten Schichten der so erhaltenen Folien grenzen dabei jeweils in der Reihenfolge unmittelbar aneinander an, in der sie nachstehend aufgeführt sind. Die Schicht (g) der so erhaltenen Folienverbunde wurde anschließend mit einer Trägerschicht (h) mittels eines auf Polyurethan-basierenden Klebstoffs kaschiert, so dass eine Mehrschichtfolie **B1** bzw. **V1** erhalten wurde. Die Mehrschichtfolie **B1** bzw. **V1** weist jeweils den Schichtaufbau gemäß der nachstehenden *Tabelle 1* bzw. *Tabelle* 2 auf und hat jeweils eine Gesamtschichtdicke von 54 µm. Alle %-Angaben in den *Tabellen* sind jeweils Gew.-%.

**Tabelle 1 - Mehrschichtfolie B1**

| Schichtaufbau **(B1)** | Rohstoffe | Schichtfolie B1 [µm] |
|---|---|---|
| Siegelschicht (a) aus zwei gleich dicken Lagen | PP-Copolymer | 10(5/5) |
| Haftvermittlerschicht (b) | HV-1 90 Gew.-% | 3 |
| | PEA-Copolymer 10 Gew.-% | |
| Schicht (c) | PA-6 | 3,5 |
| Barriereschicht (d) | EVOH | 4 |
| Schicht (e) | PA-6 | 3,5 |
| Haftvermittlerschicht (f) | HV-1 | 3 |
| Schicht (g) aus zwei gleich dicken Lagen | PP-Copolymer | 10(5/5) |
| Klebstoffschicht (i) | PUR | 2 |
| Trägerschicht (h) | PA-6 (BO) | 15 |

**Tabelle 2 - Mehrschichtfolie V1**

| Schichtaufbau **(V1)** | Rohstoffe | Schichtfolie B1 [µm] |
|---|---|---|
| Siegelschicht (a) | PP-Copolymer | 10 |
| Zwischenschicht | PP-Copolymer 90 Gew.-% | 4 |
| | PEA-Copolymer 10 Gew.-% | |
| Haftvermittlerschicht (b) | HV-1 90 Gew.-% | 3 |
| | PEA-Copolymer 10 Gew.-% | |
| Schicht (c) | PA-6 | 2 |
| Barriereschicht (d) | EVOH | 3 |
| Schicht (e) | PA-6 | 2 |
| Haftvermittlerschicht (f) | HV-1 | 3 |
| Schicht (g) aus zwei gleich dicken Lagen | PP-Copolymer | 10(5/5) |
| Klebstoffschicht (i) | PUR | 2 |
| Trägerschicht (h) | PA-6 (BO) | 15 |

### III Bestimmung der Siegelnahtfestigikeit

Die Siegelschicht (a) der Mehrschichtfolie B1 wurde als Monofolie bei einer Temperatur von 180°C (Siegelzeit: 0,5s; Siegeldruck: 5 bar; Breite des Folienstreifens: 15 mm) gegen ein 500 µm dickes Cast-PP gesiegelt und anschließend die Kraft zum Abziehen der Folie gemäß DIN 55529 ermittelt.

Die dabei gemessene Kraft entspricht der Siegelnahtfestigkeit der Schicht (a) auf der PP-Folie. Der gemessene Wert lag bei 20 N/15 mm.

### Messung der Zugfestigkeit

Die Zugfestigkeit der Folien wurde gemäß DIN EN ISO 527 bestimmt. Dazu wird ein 15 mm breiter Folienstreifen in eine Zugprüfmaschine eingespannten. Die Einspannlänge beträgt 100 mm und die Prüfgeschwindigkeit 100 mm/min. (Temperatur: 23°C). Es wird die maximale Kraft in N ermittelt, die zum Zerreißen des Prüfmusters nötig ist.

Die Prüfergebnisse der Mehrschichtfolie B1 bzw. V1 sind in der Tabelle 3 angegeben.

**Prüfergebnisse Tabelle 3**

| | Zugfestigkeit in Längsrichtung | Zugfestigkeit in Querrichtung |
|---|---|---|
| B1 | 87,1 N | 88,3 N |
| V1 | 80,1 N | 74 N |

Die beiden Mehrschichtfolien haben dieselbe Dicke. Aufgrund der höheren Dicke der PA und EVOH Schichten erhöht sich die Zugfestigkeit der Folie B1 in beide Zugrichtungen. Dadurch hat die Folie beim Einsatz als Deckelfolie für PP-Schalen folgende Vorteile:
1. Beim Abziehen der Deckelfolie ist diese stabiler und neigt weniger zum Abreißen.
2. Beim Transport der verdeckelten Schalen vermindert die höhere Reißfestigkeit die Beschädigung durch äußere mechanische Einflüsse.

## Patentansprüche

1. Eine Mehrschichtfolie umfassend eine Schichtfolge aus
(a) einer Siegelschicht (a) basierend auf wenigstens einem heißsiegelfähigen, thermoplastischen Olefin-Homo- und/oder Copolymer,
(b) einer durch Kohäsionspeel trennbaren Haftvermittlerschicht (b) aufgebaut aus einer Mischung bestehend aus wenigstens einem modifizierten, thermoplastischen Olefin-Homo- und/oder Copolymeren, das mit ≤ 1 Gew.-%, bezogen auf das Gewicht des Olefin-Homo- und/oder Copolymeren, polaren organischen Gruppen modifiziert ist, als erste Polymerkomponente und bis zu 50 Gew.-%, bezogen auf das Gesamtgewicht der Mischung, von wenigstens einem Homo- und/oder Copolymer eines (Meth)acrylat als zweite Polymerkomponente, wobei die erste Polymerkomponente keine (Meth)acrylat-Einheiten aufweist,
(c) ggf. einer Schicht (c) basierend auf wenigstens einem Homo- und/oder Copolyamid,
(d) einer Barriereschicht (d),
(e) ggf. einer Schicht (e) basierend auf wenigstens einem Homo- und/oder Copolyamid.
(f) ggf. einer Haftvermittlerschicht (f),
(g) ggf. einer Schicht (g) basierend auf wenigstens einem thermoplastischen Olefin-Homo- und/oder Copolymeren und
(h) einer Trägerschicht (h) basierend auf wenigstens einem thermoplastischen Polymer.

2. Eine Mehrschichtfolie nach Anspruch 1, **dadurch gekennzeichnet, dass** die Siegelschicht (a) aus wenigstens einem Copolymer aus Ethylen und/oder Propylen und wenigstens einem α-Olefin mit wenigstens 4 C-Atomen, vorzugsweise Buten, Hexen und/oder Octen, oder wenigstens einem Polyethylen, Polypropylen oder Propylen-Ethylen-Copolymeren und ggf. üblichen Additiven aufgebaut ist.

3. Eine Mehrschichtfolie nach einem der Ansprüche 1 oder 2, **dadurch gekennzeichnet, dass** die Siegelschicht (a) eine um wenigstens 10 %, vorzugsweise um wenigstens 30 % höhere Schichtdicke aufweist als die Schicht (b).

4. Eine Mehrschichtfolie nach einem der vorstehenden Ansprüche, **dadurch gekennzeichnet, dass** die Polymer-Mischung der Schicht (b) als erste Polymerkomponente ein modifiziertes, thermoplastisches Olefin-Homo- und/oder Copolymer aufweist, wobei das Olefin-Homo- und/oder Copolymer zumindest der Klasse der thermoplastischen Olefin-Homo und/oder Copolymeren der Siegelschicht (a) entspricht.

5. Eine Mehrschichtfolie nach einem der vorstehenden Ansprüche, **dadurch gekennzeichnet, dass** die Polymer-Mischung der Schicht (b) als zweite Polymerkomponente ein thermoplastisches Homo-Polymer von C₁₋₄-Alkyl(Meth)acrylat oder ein Copolymer von Ethylen oder Propylen mit C₁₋₄-Alkyl(Meth)acrylat aufweist.

6. Eine Mehrschichtfolie nach einem der vorstehenden Ansprüche, **dadurch gekennzeichnet, dass** die Polymer-Mischung der Schicht (b) aus 5-30 Gew.%, bezogen auf das Gesamtgewicht der Mischung, der zweiten Polymerkomponente, besteht.

7. Eine Mehrschichtfolie nach einem der vorstehenden Ansprüche, **dadurch gekennzeichnet, dass** die Schicht (b) als zweite Polymer-Komponente ein Copolymer aus Propylen/Alkylacrylat, vorzugsweise Copolymer aus Propylen/C₁₋₄-Alkylakrylat aufweist.

8. Eine Mehrschichtfolie nach einem der vorstehenden Ansprüche, **dadurch gekennzeichnet, dass** die Siegelschicht (a) eine Schichtdicke von maximal 20 µm, vorzugsweise von 5 - 15 µm aufweist.

9. Eine Mehrschichtfolie nach einem der vorstehenden Ansprüche, **dadurch gekennzeichnet, dass** die Schicht (b) eine Schichtdicke von 0,5 - 6 µm, vorzugsweise 1,5 - 4 µm aufweist.

10. Eine Mehrschichtfolie nach einem der vorstehenden Ansprüche, **dadurch gekennzeichnet, dass** die Barriereschicht (d) eine Gasbarriereschicht, vorzugsweise eine Sauerstoffbarriereschicht, ist, die aus einem Ethylen/Vinylalkohol-Copolymeren, PVOH oder einem Polyvinylidenchlorid aufgebaut ist.

11. Eine Mehrschichtfolie nach einem der vorstehenden Ansprüche, **dadurch gekennzeichnet, dass** die Barriereschicht (d) jeweils mit der angrenzenden Schicht (c) bzw. (e) basierend auf wenigstens einem Homo- und/oder Copolyamid verbunden ist.

12. Eine Mehrschichtfolie nach einem der vorstehenden Ansprüche, **dadurch gekennzeichnet, dass** die Siegelschicht (a) mit 1,5 - 10 Gew.-%, vorzugsweise 3,0 - 6,0 Gew.-%, bezogen auf das Gesamtgewicht der Siegelschicht (a), mit wenigstens einem Antifog-Additiv mit einer vorzugsweise dauerhaften Antifog-Wirkung ausgerüstet ist.

13. Ein Verpackungselement oder eine Verpackung aus einer Mehrschichtfolie nach einem der Ansprüche 1 - 12.

14. Eine leicht zu öffnende Verpackung, vorzugsweise Beutelverpackung, aus einer Mehrschichtfolie nach einem der Ansprüche 1 - 12, die durch Versiegeln der Siegelschicht (a) gegen sich selbst verschlossen ist.

15. Eine leicht zu öffnenden, zweiteilige Verpackung, deren Behälter-Öffnung mit einem Deckel aus einer Mehrschichtfolie nach einem der Ansprüche 1 - 12 über Siegelnähte verschlossen ist.

16. Eine Verpackung nach Anspruch 14 oder 15, **dadurch gekennzeichnet, dass** die Siegelfestigkeit im Siegelnahtbereich der Verpackung höher ist als die Kohäsionskraft der Schicht (b), so dass sich beim Öffnen der Verpackung die Schicht (b) durch Ein- und Durchreißen in Längsrichtung im Siegelnahtbereich in zwei Teilschichten aufspaltet.

## Claims

1. A multilayer film comprising a layer sequence comprising
(a) a sealable layer (a) based on at least one heat-sealable, thermoplastic olefin homo- and/or copolymer,
(b) an adhesion-promoter layer (b) separable by cohesion peel, composed of a mixture containing as first polymer component at least one modified, thermoplastic olefin homo- and/or copolymer modified with ≤ 1% by weight, based on the weight of the olefin homo- and/or copolymer, of polar organic groups, and, as second polymer component, up to 50% by weight, based on the total weight of the mixture, of at least one homo- and/or copolymer of a (meth)acrylate, where the first polymer component does not contain any (meth)acrylate units,
(c) optionally a layer (c) based on at least one homo- and/or copolyamide,
(d) a barrier layer (d),
(e) optionally a layer (e) based on at least one homo- and/or copolyamide,
(f) optionally an adhesion-promoter layer (f),
(g) optionally a layer (g) based on at least one thermoplastic olefin homo- and/or copolymer and
(h) a substrate layer (h) based on at least one thermoplastic polymer.

2. A multilayer film as claimed in Claim 1, **characterized in that** the sealable layer (a) is composed of at least one copolymer of ethylene and/or propylene and of at least one α-olefin having at least 4 C atoms, preferably butene, hexene and/or octene, or of at least one polyethylene, polypropylene or propylene-ethylene copolymer and optionally conventional additives.

3. A multilayer film as claimed in Claim 1 or 2, **characterized in that** the thickness of the sealable layer (a) is higher by at least 10%, preferably by at least 30%, than that of the layer (b).

4. A multilayer film as claimed in anyone of the preceding claims, **characterized in that** the polymer mixture of the layer (b) comprises, as first polymer component, a modified, thermoplastic olefin homo- and/or copolymer, whereby the olefin homo- and/or copolymer belongs at least to the class of the thermoplastic olefin homo- and/or copolymers of the sealable layer (a).

5. A multilayer film as claimed in anyone of the preceding claims, **characterized in that** the polymer mixture of the layer (b) comprises, as second polymer component, a thermoplastic homopolymer of C₁₋₄-alkyl (meth)acrylate or a copolymer of ethylene or propylene with C₁₋₄-alkyl (meth)acrylate.

6. A multilayer film as claimed in anyone of the preceding claims, **characterized in that** the polymer mixture of the layer (b) is composed of from 5 to 30% by weight, based on the total weight of the mixture, of the second polymer component.

7. A multilayer film as claimed in anyone of the preceding claims, **characterized in that** the layer (b) comprises, as second polymer component, a copolymer of propylene/alkyl acrylate, preferably a copolymer of propylene/C₁₋₄-alkyl acrylate.

8. A multilayer film as claimed in anyone of the preceding claims, **characterized in that** the thickness of the sealable layer (a) is at most 20 µm, preferably from 5 to 15 µm.

9. A multilayer film as claimed in anyone of the preceding claims, **characterized in that** the thickness of the layer (b) is from 0.5 to 6 µm, preferably from 1.5 to 4 µm.

10. A multilayer film as claimed in anyone of the preceding claims, **characterized in that** the barrier layer (d) is a gas-barrier layer, preferably an oxygen-barrier layer, composed of an ethylene/vinyl alcohol copolymer, of PVOH, or of a polyvinylidene chloride.

11. A multilayer film as claimed in anyone of the preceding claims, **characterized in that** the barrier layer (d) has respectively been bonded to the adjacent layer (c) and, respectively, (e) based on at least one homo- and/or copolyamide.

12. A multilayer film as claimed in anyone of the preceding claims, **characterized in that** the sealable layer (a) is equipped with from 1.5 to 10% by weight, preferably from 3.0 to 6.0% by weight, based on the total weight of the sealable layer (a) of at least one antifogging additive with a preferably long-lasting antifogging effect.

13. A packaging element or packaging made of a multilayer film as claimed in anyone of Claims 1 to 12.

14. An easy-to-open packaging, preferably a tubular bag packaging, made of a multilayer film as claimed in anyone of Claims 1 to 12, which is closed by sealing the sealable layer (a) against itself.

15. An easy-to-open, two-part packaging, the container opening of which is closed by a cover made of a multilayer film as claimed in Claims 1 to 12, by way of seal seams.

16. A packaging according to Claim 14 or 15, **characterized in that** the seal strength in the region of the seal seam of the packaging is higher than the cohesion force of the layer (b) whereby on opening of the packaging the layer (b) is drawn in a longitudinal direction in the region of the seal seam into two sublayers.

## Revendications

1. Feuille multicouche comprenant une succession de couches constituée par :
(a) une couche de scellement (a) à base d'au moins un homo- et/ou copolymère oléfinique thermoplastique thermoscellable,
(b) une couche de promoteur d'adhésion (b) séparable par pelage par cohésion, composée d'un mélange constitué par au moins un homo- et/ou copolymère oléfinique thermoplastique modifié, qui est modifié avec ≤ 1 % en poids, par rapport au poids de l'homo- et/ou du copolymère oléfinique, de groupes organiques polaires, en tant que premier composant polymère, et jusqu'à 50 % en poids, par rapport au poids total du mélange, d'au moins un homo- et/ou copolymère d'un (méth)acrylate en tant que second composant polymère, le premier composant polymère ne comprenant pas d'unités (méth)acrylate,
(c) éventuellement une couche (c) à base d'au moins un homo- et/ou copolyamide,
(d) une couche de barrière (d),
(e) éventuellement une couche (e) à base d'au moins un homo- et/ou copolyamide,
(f) éventuellement une couche de promoteur d'adhésion (f),
(g) éventuellement une couche (g) à base d'au moins un homo- et/ou copolymère oléfinique thermoplastique, et
(h) une couche support (h) à base d'au moins un polymère thermoplastique.

2. Feuille multicouche selon la revendication 1, **caractérisée en ce que** la couche de scellement (a) est composée d'au moins un copolymère d'éthylène et/ou de propylène et d'au moins une α-oléfine contenant au moins 4 atomes C, de préférence le butène, l'hexène et/ou l'octène, ou d'au moins un polyéthylène, un polypropylène ou un copolymère de propylène-éthylène, et éventuellement des additifs usuels.

3. Feuille multicouche selon l'une quelconque des revendications 1 ou 2, **caractérisée en ce que** la couche de scellement (a) présente une épaisseur de couche au moins 10 %, de préférence au moins 30 % plus élevée que la couche (b).

4. Feuille multicouche selon l'une quelconque des revendications précédentes, **caractérisée en ce que** le mélange de polymères de la couche (b) comprend en tant que premier composant polymère un homo- et/ou copolymère oléfinique thermoplastique modifié, dont l'homo- et/ou le copolymère oléfinique correspond au moins à la classe de l'homo- et/ou du copolymère oléfinique thermoplastique de la couche de scellement (a).

5. Feuille multicouche selon l'une quelconque des revendications précédentes, **caractérisée en ce que** le mélange de polymères de la couche (b) comprend en tant que second composant polymère un homopolymère thermoplastique de (méth)acrylate d'alkyle en C₁-C₄ ou un copolymère d'éthylène ou de propylène avec du (méth)acrylate d'alkyle en C₁-C₄.

6. Feuille multicouche selon l'une quelconque des revendications précédentes, **caractérisée en ce que** le mélange de polymères de la couche (b) est constitué par 5 à 30 % en poids, par rapport au poids total du mélange, du second composant polymère.

7. Feuille multicouche selon l'une quelconque des revendications précédentes, **caractérisée en ce que** la couche (b) comprend en tant que second composant polymère un copolymère de propylène/acrylate d'alkyle, de préférence un copolymère de propylène/acrylate d'alkyle en C₁₋₄.

8. Feuille multicouche selon l'une quelconque des revendications précédentes, **caractérisée en ce que** la couche de scellement (a) présente une épaisseur de couche d'au plus 20 µm, de préférence de 5 à 15 µm.

9. Feuille multicouche selon l'une quelconque des revendications précédentes, **caractérisée en ce que** la couche (b) présente une épaisseur de couche de 0,5 à 6 µm, de préférence de 1,5 à 4 µm.

10. Feuille multicouche selon l'une quelconque des revendications précédentes, **caractérisée en ce que** la couche de barrière (d) est une couche de barrière de gaz, de préférence une couche de barrière d'oxygène, qui est composée d'un copolymère éthylène/alcool vinylique, de PVOH ou d'un polychlorure de vinylidène.

11. Feuille multicouche selon l'une quelconque des revendications précédentes, **caractérisée en ce que** la couche de barrière (d) est reliée respectivement avec la couche (c) ou (e) adjacente à base d'au moins un homo- et/ou copolyamide.

12. Feuille multicouche selon l'une quelconque des revendications précédentes, **caractérisée en ce que** la couche de scellement (a) est munie de 1,5 à 10 % en poids, de préférence 3,0 à 6,0 % en poids, par rapport au poids total de la couche de scellement (a), d'au moins un additif antibuée présentant de préférence un effet antibuée durable.

13. Élément d'emballage ou emballage en une feuille multicouche selon l'une quelconque des revendications 1 à 12.

14. Emballage facile à ouvrir, de préférence emballage en forme de poche, en une feuille multicouche selon l'une quelconque des revendications 1 à 12, qui est fermé par scellement de la couche de scellement (a) avec elle-même.

15. Emballage facile à ouvrir en deux parties, dont l'ouverture de contenant est fermée avec un couvercle en une feuille multicouche selon l'une quelconque des revendications 1 à 12 par des joints de scellement.

16. Emballage selon la revendication 14 ou 15, **caractérisé en ce que** la résistance du scellement dans la zone des joints de scellement de l'emballage est plus élevée que la force de cohésion de la couche (b), de sorte que lors de l'ouverture de l'emballage, la couche (b) se sépare en deux couches partielles par déchirure dans la direction longitudinale dans la zone des joints de scellement.
